# EUROPÄISCHE PATENTANMELDUNG

(11) **EP 1 829 827 A1**
(43) Veröffentlichungstag der Anmeldung: **05.09.2007**
(21) Anmeldenummer: 06006780.8
(22) Anmeldetag: 30.03.2006
(51) Int. Cl.: C02F 3/10, C02F 3/26, C02F 3/30, C02F 3/12, C02F 101/38, C02F 101/16

(54) **Verfahren zur biologischen Reinigung von Abwässern mit simultanem Abbau von organischen und stickstoffhaltigen Verbindungen**

(30) Priorität: 03.03.2006 DE 102006009878
(71) Anmelder: LINDE-KCA-Dresden GmbH, 01277 Dresden (DE)
(72) Erfinder: Jell, Anton, 85586 Poing (DE); Morper, Manfred, Dr., 82319 Starnberg (DE)

(57) **Zusammenfassung**

Es wird ein Verfahren zur biologischen Reinigung von organische sowie stickstoffhaltige Verbindungen enthaltendem Abwasser beschrieben, bei dem das Abwasser in einem längsdurchströmten Reaktor 1 in Gegenwart von einem auf Trägermaterial 9 fixierter Biomasse mit Luft und/oder reinem Sauerstoff begast und anschließend in einer Nachklärung 5 in gereinigtes Wasser und Schlamm aufgetrennt wird. Der abgetrennte Schlamm wird zumindest teilweise wieder in den Reaktor 1 zurückgeführt. Als Trägermaterial 9 für die Mikroorganismen werden Trägerteilchen in im Abwasser frei beweglicher Menge in den Reaktor eingebracht. Um im Reaktor 1 gleichzeitig sowohl einen Abbau der organischen als auch der stickstoffhaltigen Verbindungen zu ermöglichen, wird vorgeschlagen, durch eine geeignete Begasungsmethode eine walzenförmige Strömung 10 des beweglichen Reaktorinhalts senkrecht zur Fließrichtung im Reaktor 1 zu erzeugen. Hierzu sind in Fließrichtung des Reaktors 1 weitgehend kontinuierliche Begasungsflächen 11 vorgesehen, denen senkrecht zur Fließrichtung unbegaste Flächen 12 benachbart sind. In der aufsteigenden Strömung über den Begasungsflächen 11 werden somit günstige Voraussetzungen für die Nitrifikation eingestellt, während in der absteigenden Strömung über den begasungsfreien Flächen 12 Denitrifikationsvorgänge begünstigt werden.

## Beschreibung

Die Erfindung betrifft ein Verfahren zur biologischen Reinigung von organische sowie stickstoffhaltige Verbindungen enthaltendem Abwasser, bei dem das Abwasser in einem längsdurchströmten Reaktor in Gegenwart von auf einem Trägermaterial fixierter Biomasse mit Luft und/oder reinem Sauerstoff begast und anschließend in einer Nachklärung in gereinigtes Wasser und Schlamm aufgetrennt wird und der abgetrennte Schlamm zumindest teilweise wieder in den Reaktor zurückgeführt wird, und bei dem in den Reaktor als Trägermaterial für die Mikroorganismen Trägerteilchen in im Abwasser frei beweglicher Menge eingebracht werden.

Bei Verfahren zur trägergebundenen Abwasserreinigung liegt die aus den Mikroorganismen gebildete Biomasse zum Teil in Form suspendierter Schlammflocken (Belebtschlamm) und zum Teil fixiert auf im Reaktor frei beweglichem Trägermaterial vor. Als Trägermaterial können z.B. stückige, poröse Schaumstoffteilchen verwendet werden. Abwasser und suspendierte Biomasse fließen aus dem Reaktor in eine Nachklärung, wo sie mechanisch, z.B. durch Sedimentation, getrennt werden. Die abgetrennte Biomasse wird zum Teil als Rücklaufschlamm in den Reaktor zurückgeführt und zum Teil als Überschussschlamm ausgeschleust und entsorgt. Die fixierte Biomasse wird durch mechanische Rückhaltung der Trägerteilchen (z.B. mittels einer Siebwand) am Verlassen des Reaktors gehindert.

Ein derartiges Verfahren ist aus der EP 0 233 466 B1 bekannt. Das dort beschriebene Verfahren beseitigt einen Nachteil herkömmlicher Verfahren, der darin besteht, dass diese zur biologischen Elimination von organischen Inhaltsstoffen und Stickstoffverbindungen große Reaktorvolumina benötigen. Dies ist darin begründet, dass die biologische Elimination des - als Ammonium vorliegenden - Stickstoffs über zwei aufeinander folgende biochemische Reaktionen erfolgt, die unterschiedliche Reaktionsbedingungen erfordern.

Zuerst wird in der Nitrifikation Ammonium (NH₄⁺) durch spezielle Bakterien unter Sauerstoffzufuhr zu Nitrat oxidiert. Das Nitrat wird anschließend in der Denitrifikation von anderen Bakterien zu elementarem Stickstoff (N₂) reduziert, wobei bevorzugt die im zulaufenden Abwasser enthaltenen organische Stoffe als Reduktionsmittel dienen.

Da die Nitrifikation als aerobe Oxidation auf eine ausreichende Sauerstoffzufuhr angewiesen ist, während die anoxische Denitrifikation sauerstofffreie, zumindest aber sauerstoffarme Reaktionsbedingungen voraussetzt, muss eine Anlage zur biologischen Stickstoffelimination sowohl Volumenanteile mit erhöhten als auch solche mit möglichst geringen Gehalten an gelöstem Sauerstoff aufweisen.

Während herkömmliche Anlagen (siehe ATV-DVWK-Regelwerk Arbeitsblatt A131) diese konträren Reaktionsbedingungen entweder in jeweils getrennten Reaktoren aufrecht erhalten, oder diese alternierend durch Zu- und Abschaltung der Belüftung einstellen und dementsprechend große Reaktorvolumina beanspruchen, wird die Stickstoffelimination nach der EP 0 233 466 B1 in hohem Maße simultan in einem Reaktor erreicht.

Zu diesem Zweck werden in einem Reaktor (Belebungsbecken) in Fließrichtung Zonen mit unterschiedlichen Gehalten an gelöstem Sauerstoff betrieben. Dies wird durch jeweils unterschiedliche Luft- bzw. Sauerstoffzufuhr erreicht. In Zonen mit hohem Sauerstoffgehalt findet bevorzugt die Nitrifikation statt. In Zonen mit niedrigem Sauerstoffgehalt wird zumindest eine partielle Denitrifikation erreicht, ohne dass für diesen Anteil ein separates Beckenvolumen benötigt wird.

Trotz der unstrittigen Einsparung von Reaktorvolumen weist eine Anlage nach der EP 0 233 466 B1 eine Reihe von betriebstechnischen Nachteilen auf:

Wird z.B. gemäß Ausführungsbeispiel in Fließrichtung zunächst eine Zone mit niedrigem Sauerstoffgehalt, also verminderter Sauerstoffzufuhr, betrieben, so ist die dort gewünschte Denitrifikation auf eine ausreichende Nitratrückförderung aus Zonen mit hohem Sauerstoffgehalt angewiesen, da dieses nur dort entsteht.

Eine niedrige Sauerstoffkonzentration geht einher mit einer geringen Durchmischung und führt zum Aufschwimmen der Trägerteilchen durch den Flotationseffekt der bei der Denitrifikation entstehenden Stickstoffbläschen. Die als Schwimmdecke akkumulierenden Trägerteilchen nehmen nicht mehr am Stoffumsatz teil.

Bei der auf die Zone mit niedrigem Sauerstoffgehalt folgenden aeroben Zone wird zwar eine hohe Nitrifikationsrate erreicht, die Denitirifikation jedoch weitgehend unterdrückt. Die mit der intensiven Belüftung einhergehende Energiedichte im Belebungsbecken führt zu einer Verlagerung von Trägermaterial in Zonen mit geringer Energiedichte und verstärkt dort die Schwimmdeckenbildung. Außerdem führt die Verdrängung zu einer Herabsetzung der Nitrifikationskapazität, da die auf diesem Trägermaterialanteil fixierten nitrifizierenden Bakterien nicht für die Nitrifikation zur Verfügung stehen.

Die nachfolgende Zone mit erneut niedrigem Sauerstoffgehalt erhält zwar aus der vorgelagerten, stark aeroben Zone einen nitrathaltigen Zulauf. Dennoch ist die Denitrifikation eingeschränkt, da die vorausgegangenen Zonen, die als Reduktionsmittel benötigten organischen Kohlenstoffverbindungen weitgehend abgebaut haben. Wegen der aufgrund des geringen Sauerstoffbedarfs niedrigen Mischenergie ist die Tendenz zum Aufschwimmen des Trägermaterials besonders hoch.

Der vorliegenden Erfindung liegt die Aufgabe zugrunde, ein Verfahren der eingangs genannten Art so auszugestalten, dass auf eine erhöhte Nitratrückführung aus Zonen mit starker Belüftung in solche mit verringerter Belüftung verzichtet werden kann und Kapazitätseinbußen bei der Denitrifikation durch aufschwimmendes Trägermaterial und bei der Nitrifikation durch Verdrängung von Trägermaterial aus Zonen mit hoher Energiedichte vermieden werden können.

Diese Aufgabe wird erfindungsgemäß dadurch gelöst, dass durch Einhaltung folgender Begasungs- und Strömungsverhältnisse im Reaktor gezielt ein gleichzeitiger Abbau von organischen und stickstoffhaltigen Verbindungen durchgeführt wird:
a) Aufrechterhaltung einer sich in Strömungsrichtung erstreckenden kontinuierlichen Begasung über mindestens eine längs zur Strömungsrichtung verlaufende Begasungsfläche auf der Reaktorsohle,
b) Ausbildung mindestens einer unbegasten, in senkrechter Richtung zur Strömungsrichtung der Begasungsfläche benachbarten Freifläche und
c) Erzeugung einer walzenförmigen Strömung des beweglichen Reaktorinhalts, bei der die Strömung über der Begasungsfläche aufwärts, an der Oberfläche des Reaktorinhalts horizontal in Richtung der Freifläche, über der Freifläche abwärts und an der Reaktorsohle horizontal zur Begasungsfläche hin gerichtet ist.

Die Erfindung geht von der Überlegung aus, dass ein gleichzeitiger Abbau von organischen und stickstoffhaltigen Verbindungen im Reaktor über die Einstellung definierter hydraulischer Profile durch Wahl einer geeigneten Begasungsmethode erreicht werden kann. Hierzu werden die entsprechend dem Sauerstoffbedarf erforderlichen Begasungselemente (z.B. fein- oder grobblasige Rohr-, Platten- oder Tellerbelüfter, Ejektoren, statische Mischbelüfter) auf der Sohle eines beispielsweise als Belebungsbecken ausgebildeten Reaktors als in Fließrichtung weitgehend kontinuierliche Begasungsflächen angeordnet, die beispielsweise als Belüfterfelder ausgebildet sein können. Parallel, neben und zwischen den Belüfterfeldern verbleiben auf der Beckensohle unbelegte Flächen, die eine Breite von vorzugsweise mindestens 0,5 m aufweisen und höchstens der Breite der Belüfterfelder entsprechen. Diese Anordnung bewirkt bei Luft- bzw. Sauerstoffzufuhr die Ausbildung einer geschlossenen Walzenströmung des beweglichen Beckeninhalts (Abwasser, Belebtschlamm, Trägermaterial) senkrecht zur Fließrichtung, mit einer aufwärts gerichteten Strömung über den Belüfterfeldern und einer abwärts gerichteten Strömung über den unbelebten Teilen der Beckensohle. Belüfterfeld und Freifläche bewirken somit eine spiralförmige Beckendurchströmung.

Diese hydraulischen Verhältnisse wirken sich auf die biologischen Abbauvorgänge dahingehend aus, dass in der aufsteigenden Strömung über den Belüfterfeldern infolge des erhöhten Gehalts an gelöstem Sauerstoff günstige Voraussetzungen für die Nitrifikation sowohl durch die suspendierte als auch durch die fixierte Biomasse herrschen.

Dagegen führt die Unterbrechung der Sauerstoffzufuhr in der absteigenden Strömung und in der an der Beckensohle zu den Belüfterfeldern zurückführenden Strömung zu einer Verringerung des Gehaltes an gelöstem Sauerstoff, der im Wesentlichen von der suspendierten Biomasse und der fixierten Biomasse auf der Trägermaterialoberfläche aufgezehrt wird. Dadurch werden bei einer bevorzugten Verwendung von Trägerteilchen mit inneren und äußeren Aufwuchsflächen für die Mikroorganismen insbesondere im Inneren des Trägermaterials Denitrifikationsvorgänge begünstigt.

Die Walzenströmung senkrecht zur Fließrichtung führt zu einer homogenen Beckendurchmischung, wobei der Beckeninhalt während der Verweilzeit vielfach zwischen den Bereichen mit erhöhtem und verringertem Gehalt an gelöstem Sauerstoff wechselt.

Auf diese Weise werden gegenüber dem Verfahren nach der EP 0 233 466 B1 sowohl Schwimmdecken aus flotierendem Trägermaterial als auch Verdrängungen von Trägermaterial aus Zonen mit hoher Energiedichte und somit Kapazitätseinbußen durch nicht am Reaktionsgeschehen beteiligte Trägermaterialanteile vermieden.

Wie bereits erwähnt wird eine gleichzeitige Durchführung von Nitrifikations- und Denitrifikationsvorgängen im Reaktor durch die bevorzugte Verwendung von Trägerteilchen mit inneren und äußeren Aufwuchsflächen für die Mikroorganismen begünstigt. Dabei können Trägerteilchen eingesetzt werden, die beispielsweise Gitterstrukturen aufweisen, welche einen Zugang von Abwasserinhaltsstoffen in die inneren Bereiche der Trägerteilchen ermöglichen. Besonders bevorzugt werden Trägerteilchen mit einer Porenstruktur verwendet, die vorteilhafterweise Mikro- und Makroporen aufweisen, wodurch sowohl innere und äußere Aufwuchsflächen für die Mikroorganismen geschaffen werden als auch ausreichender Zugang von Abwasserinhaltsstoffen zu den inneren Aufwuchsflächen geboten wird. Solche Trägerteilchen können aus unterschiedlichen Materialien gefertigt sein, beispielsweise können sie aus porösem Sintermaterial oder Kunststoffen bestehen.

Gemäß einer besonders bevorzugten Ausgestaltung der Erfindung werden als Trägerteilchen poröse Schaumstoffteilchen eingesetzt. Diese bestehen vorteilhafterweise aus einem offenzelligen Polyurethanschaumstoff und weisen Teilchengrößen von 2 bis 50 mm und ein spezifiisches Gewicht von 20 bis 200 kg pro Kubikmeter auf. Die Porendurchmesser betragen zweckmäßigerweise 0,1 bis 5 mm.

Zur Unterstützung der optimalen hydraulischen Verhältnisse werden die Trägerteilchen mit Vorteil in einer Menge von 15 bis 35% des Reaktorvolumens in den Reaktor eingebracht.

Für eine besonders effektive Reinigung des Abwassers unter gleichzeitigem Abbau von Kohlenstoff- und Stickstoffverbindungen wird außerdem empfohlen, im Reaktor eine BSB5-Raumbelastung von 0,4 bis 2,5kg/m³ x d und eine TKN-Raumbelastung von 0,1 bis 0,8kg/m³/d einzustellen.

Zweckmäßigerweise wird ferner die Begasung so eingestellt, dass im Bereich der aufwärts gerichteten Strömung ein Gehalt von 1 bis 4 mg pro Liter an gelöstem Sauerstoff aufrechterhalten wird.

Gemäß einer Weiterbildung des Erfindungsgedankens wird eine kontinuierliche Begasung über mehrere parallel zueinander verlaufende, in Strömungsrichtung sich erstreckende Flächen auf der Reaktorsohle aufrechterhalten, wobei senkrecht zur Strömungsrichtung liegende Zwischenflächen begasungsfrei gehalten werden. Dadurch werden mehrere walzenförmige Strömungen senkrecht zur Strömungsrichtung erzeugt.

Eine weitere Ausgestaltung der Erfindung sieht vor, dass ein Anteil von 20 bis 100% bezogen auf den Reaktordurchfluss vom Ende zum Anfang des Reaktors zurückgeführt und dort in die abwärts gerichtete Strömung geleitet wird.

Im Folgenden soll die Erfindung anhand von in den Figuren schematisch dargestellten Ausführungsbeispielen näher erläutert werden.

Es zeigen
- Figur 1: eine Aufsicht auf eine Belebungsanlage mit einem Belebungsbecken, in dem eine Strömungswalze erzeugt wird.
- Figur 2: einen Querschnitt des Belebungsbeckens senkrecht zur Fließrichtung
- Figur 3: einen Querschnitt durch ein Belebungsbecken senkrecht zur Strömungsrichtung mit zwei gegenläufigen Walzenströmungen
- Figur 4: einen Querschnitt durch ein Belebungsbecken senkrecht zur Strömungsrichtung mit zwei außenseitigen unbelüfteten Zonen und einem mittigen Belüfterfeld

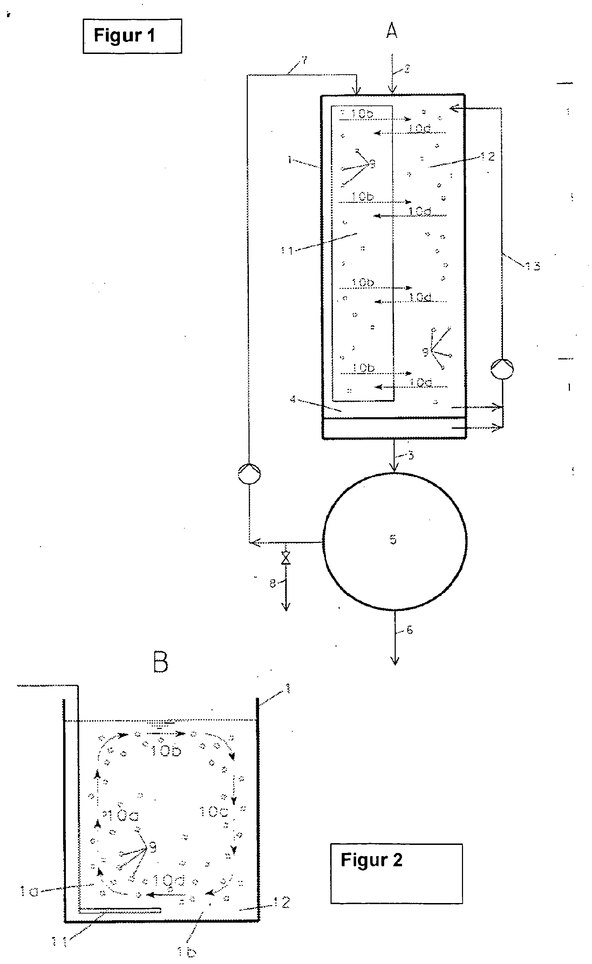

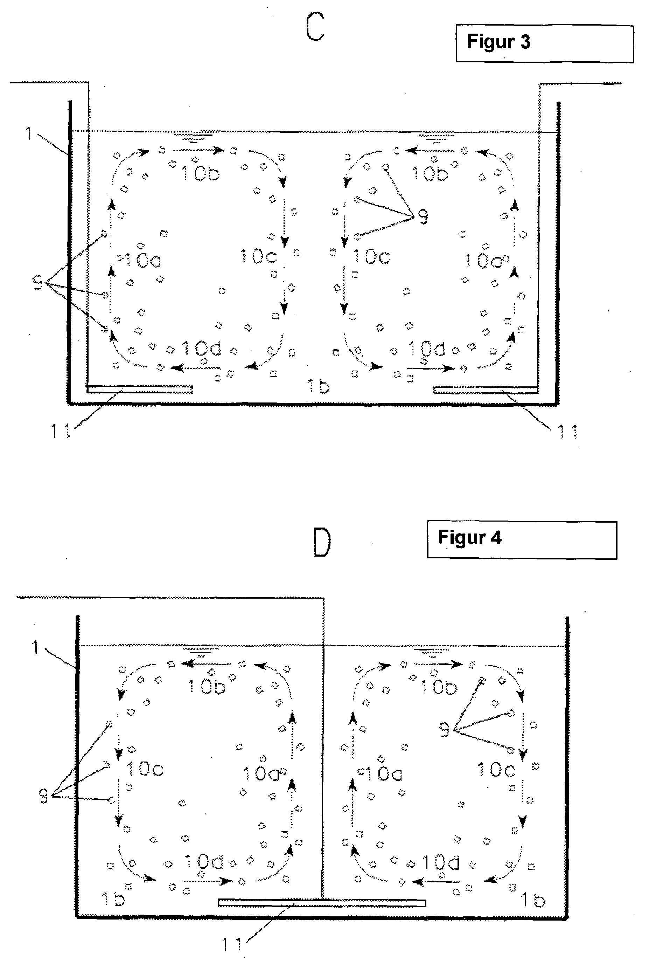

Mit 1 ist in Figur 1 ein als volldurchmischtes Belebungsbecken ausgebildeter Reaktor bezeichnet, in dem, wie durch kleine Quadrate 9 angedeutet, frei bewegliches Trägermaterial für Mikroorganismen in Form von porösen Würfeln aus Polyurethanschaumstoff vorhanden ist, das 15 bis 35% des Reaktorvolumens einnimmt. Das zu behandelnde Abwasser wird über einen Zulauf 2 in das Belebungsbecken 1 geleitet, während das Gemisch aus behandeltem Abwasser und Belebtschlamm über ein im oberen Bereich des Belebungsbeckens angeordneten Ablauf 3, dem eine Trenneinrichtung 4 zum Zurückhalten der einzelnen Trägermaterialteilchen, z.B. in Form einer Siebwand, vorgeschaltet ist, einer als Absetzbecken ausgebildeten Nachklärung zugeführt wird. Von dort fließt geklärtes Abwasser aus der Anlage ab, während der sedimentierte Schlamm teilweise über einen Schlammabzug 8 ausgeschleust wird. Die Sohle des Belebungsbeckens gemäß den Figuren 1 und 2 ist zu mehr als 50% der Breite mit einem Belüfterfeld 11 belegt, während die verbleibende Fläche von höchstens 50% der Breite unbelegt ist. Die aus dem Belüfterfeld 11 aufsteigenden Luft- und/oder Sauerstoffgasblasen versetzen den beweglichen Beckeninhalt in eine aufwärts gerichtete Strömung gemäß Pfeil 10a, welche an der Oberfläche horizontal zur gegenüberliegenden Beckenwand (Pfeil 10b) umgelenkt wird. Über der freien Beckensohle stellt sich eine abwärts gerichtete Strömung (gemäß Pfeil 10c) ein. Die an der Beckensohle wirksam werdende Sogwirkung der aufsteigenden Gasblasen über dem Belüfterfeld 11 bewirkt eine horizontale Strömung gemäß Pfeil 10d.

Insgesamt entsteht so senkrecht zur Fließrichtung eine geschlossene Walzenströmung. Das Belebungsbecken enthält eine weitere Rückführleitung 11, über die vor oder hinter der Rückhalteeinrichtung entnommener nitrathaltiger Beckeninhalt in den abwärts gerichteten Strömungsteil im Zulaufbereich gefördert wird.

Figur 3 stellt einen Querschnitt durch ein Belebungsbecken senkrecht zur Strömungsrichtung mit zwei gegenläufigen Walzenströmungen dar, bei denen zwei Belüfterfelder 11 an den Beckenrändern eine mittige unbelüftete Zone 12 zugeordnet ist.

Gemäß Figur 4 sind zwei außenseitige unbelüftete Zonen 12 einem mittigen Belüfterfeld 11 zugeordnet, was ebenfalls zwei gegenläufige Walzenströmungen erzeugt.

## Patentansprüche

1. Verfahren zur biologischen Reinigung von organische sowie stickstoffhaltige Verbindungen enthaltendem Abwasser, bei dem das Abwasser in einem längsdurchströmten Reaktor (1) in Gegenwart von auf einem Trägermaterial (9) fixierter Biomasse mit Luft und/oder reinem Sauerstoff begast und anschließend in einer Nachklärung (5) in gereinigtes Wasser und Schlamm aufgetrennt wird und der abgetrennte Schlamm zumindest teilweise wieder in den Reaktor (1) zurückgeführt wird, und bei dem in den Reaktor (1) als Trägermaterial (9) für die Mikroorganismen Trägerteilchen in im Abwasser frei beweglicher Menge eingebracht werden, **dadurch gekennzeichnet, dass** durch Einhaltung folgender Begasungs- und Strömungsverhältnisse im Reaktor (1) gezielt ein gleichzeitiger Abbau von organischen und stickstoffhaltigen Verbindungen durchgeführt wird:
a) Aufrechterhaltung einer sich in Strömungsrichtung erstreckenden kontinuierlichen Begasung über mindestens eine längs zur Strömungsrichtung verlaufende Begasungsfläche (11) auf der Reaktorsohle,
b) Ausbildung mindestens einer unbegasten, in senkrechter Richtung zur Strömungsrichtung der Begasungsfläche (11) benachbarten Freifläche (12) und
c) Erzeugung einer walzenförmigen Strömung (10a, b, c, d) des beweglichen Reaktorinhalts, bei der die Strömung über der Begasungsfläche (11) aufwärts, an der Oberfläche des Reaktorinhalts horizontal in Richtung der Freifläche (12), über der Freifläche (12) abwärts und an der Reaktorsohle horizontal zur Begasungsfläche (11) hin gerichtet ist.

2. Verfahren nach Anspruch 1, **dadurch gekennzeichnet, dass** Trägerteilchen (9) mit inneren und äußeren Aufwuchsfläche für die Mikroorganismen verwendet werden.

3. Verfahren nach Anspruch 2, **dadurch gekennzeichnet, dass** als Trägerteilchen (9) poröse Schaumstoffteilchen verwendet werden.

4. Verfahren nach einem der Ansprüche 1 bis 3, **dadurch gekennzeichnet, dass** die Trägerteilchen (9) in einer Menge von 15 bis 35% des Reaktorvolumens eingebracht werden.

5. Verfahren nach einem der Ansprüche 1 bis 4, **dadurch gekennzeichnet, dass** im Reaktor eine BSB5-Raumbelastung von 0,4 bis 2,5kg/m³ x d und eine TKN-Raumbelastung von 0,1 bis 0,8kg/m³/d eingestellt werden.

6. Verfahren nach einem der Ansprüche 1 bis 5, **dadurch gekennzeichnet, dass** die Begasung so eingestellt wird, dass im Bereich der aufwärtsgerichteten Strömung ein Gehalt von 1 bis 4 mg pro Liter an gelöstem Sauerstoff aufrechterhalten wird.

7. Verfahren nach einem der Ansprüche 1 bis 6 **dadurch gekennzeichnet, dass** eine kontinuierliche Begasung über mehrere parallel zueinander verlaufende, in Strömungsrichtung sich erstreckende Begasungsflächen (11) auf der Reaktorsohle aufrechterhalten wird, wobei zwischen den Begasungsflächen (11) senkrecht zur Strömungsrichtung benachbart liegende Freiflächen (12) begasungsfrei gehalten werden, wodurch mehrere walzenförmige Strömungen (10a, b, c, d) senkrecht zur Strömungsrichtung erzeugt werden.

8. Verfahren nach einem der Ansprüche 1 bis 7 **dadurch gekennzeichnet, dass** ein Anteil von 20 bis 100% bezogen auf den Reaktordurchfluss vom Ende zum Anfang zurückgeführt und dort in die abwärts gerichtete Strömung geleitet wird.
